# EUROPEAN PATENT APPLICATION

(11) **EP 0 767 328 A1**
(43) Date of publication of application: **09.04.1997**
(21) Application number: 96114862.4
(22) Date of filing: 17.09.1996
(51) Int. Cl.: F16H 63/44

(54) **Transmission**

(30) Priority: 06.10.1995 US 540281
(71) Applicant: EATON CORPORATION, Cleveland, Ohio 44114-2584 (US)
(72) Inventor: Braun, Eugene Ralph, Royal Oak, Michigan 48073 (US)
(74) Representative: Patentanwälte Rüger, Barthelt & Abel

(57) **Abstract**

A compound change-gear transmission (100) and control therefor are provided. The manually shifted compound transmission comprises a two-speed input subsplitter section (102) connected in series with a multiple-speed, lever-shifted main transmission section (104) connected in series with a splitter section (108) connected in series with a range section (110). Preferably, the splitter and range sections are defined by a combined three-layer, four-speed splitter and range output auxiliary section (106). A manually controlled multiple-position switch (170) is provided for controlling shifting of the subsplitter clutch (116) and the splitter clutch (156), with each of the selectable switch positions corresponding to a unique combination of splitter and subsplitter clutch positions. An automatic range switch (174) responsive to movements of the transmission shift lever is utilized to automatically control the range clutch (158). The combination of transmission structure and control provides an operator shift pattern (Fig. 2A, Fig. 3A) which minimizes the number of required shift lever movements for selectively engaging the available transmission ratios.

## Description

### BACKGROUND OF THE INVENTION

### Field of the Invention

The present invention relates to compound transmissions, usually manually shifted transmissions, of the synchronized type and to controls therefor. In particular, the present invention relates to transmissions and to controls for transmissions, of the type utilizing a subsplitter-type input section and a combined splitter-and-range-type output section connected in series with the main transmission section.

### Description of the Prior Art

Compound transmissions of the range type, splitter type and combined range-and-splitter type are well known in the prior art, as may be seen by reference to U.S. Patents No. 4,754,665; 5,000,060; 5,272,939 and 5,390,561, the disclosures of which are incorporated by reference herein. Compound transmissions utilizing a subsplitter-type input section may be seen by reference to U.S. Patents No. 4,966,048 and 5,054,591, the disclosures of which are incorporated by reference herein.

In compound transmissions of the synchronized type, especially when utilized in heavy-duty vehicles, it is known that at least some of the synchronized clutch assemblies will be of the "self-energizing" or "boosted" type, as disclosed in U.S. Patents No. 5,065,855; 5,078,244; 5,078,245; 5,086,897; 5,092,439 and 5,111,922, the disclosures of which are incorporated by reference herein. Heavy-duty synchronized transmissions utilizing such synchronizers are manufactured and sold in Europe by Eaton Limited and Eaton S.A., wholly owned subsidiaries of the assignee of this application, under the trademark "S Series."

While many of the prior art transmissions are commercially and functionally successful, they are subject to improvement in the areas of reduced numbers of gears to provide a given number of selectable ratios, easier to utilize and/or less complicated controls and/or reduction of effective ratios (and, thus, torque) at certain synchronizer clutches.

### SUMMARY OF THE INVENTION

In accordance with the present invention, an improved compound transmission, preferably a synchronized transmission, and transmission control are provided utilizing a minimal number of gears, or gear layers, to provide a given number of selectable ratios, providing an improved control and minimizing the effective ratios to the main section clutches associated with the lowest speed transmission ratios. The foregoing is accomplished by providing a transmission, preferably a wholly or partially synchronized transmission, having a subsplitter input section and a three-gear-layer, four-speed, combined splitter-and-range-type output section. The subsplitter, splitter and range clutches are controlled by a first, second and third remote actuator, respectively, such as two- or three-position, pressurized, fluid-actuated pistons, while the main section is controlled by a shift bar or rod assembly of the types seen in U.S. Patents No. 4,920,815 and 5,219,391, the disclosures of which are incorporated by reference herein. In the preferred embodiments, the first and second actuators are controlled by a three- or four-position selector typically located on the shift lever knob, while the third actuator is automatically controlled by a range switch of the type associated with so-called "double-H" controls (see aforementioned U.S. Patent No. 5,000,060).

Accordingly, it is an object of the present invention to provide a new and improved compound transmission, preferably a synchronized-type compound transmission, and controls therefor.

This and other objects and advantages of the present invention will become apparent from a reading of the detailed description of the preferred embodiment taken in connection with the drawings.

### BRIEF DESCRIPTION OF THE DRAWINGS

Figure 1 is a schematic illustration of a prior art compound transmission.

Figure 1A is a schematic illustration of the shift pattern for manually controlling the transmission of Figure 1.

Figure 1B is a chart illustrating the engaged clutches and overall ratios associated with the various selectable speed ratios for the transmission of Figure 1.

Figure 2 is a schematic illustration of a preferred embodiment of the compound transmission of the present invention.

Figure 2A is a schematic illustration of the shift pattern for manually controlling the transmission of Figure 2.

Figure 2B is a chart illustrating the engaged clutches and overall transmission ratios associated with the various selectable ratios for the compound transmission of Figure 2.

Figure 3 is a schematic illustration of an alternate 9-, 12- or 16-speed embodiment of a compound transmission according to the present invention.

Figure 3A is a schematic illustration of the shift pattern for manually controlling the transmission of Figure 3.

Figure 3B is a chart illustrating the engaged clutches for the various selectable ratios of the compound transmission of Figure 3.

Figures 4 and 5, respectively, are schematic illustrations of the splitter and subsplitter controls for the overdrive and direct drive versions, respectively, of the transmissions of Figures 2 and 3.

Figure 6 is a schematic illustration of an alternate embodiment of the present invention which may be provided in 9-speed, 12-speed or 16-speed versions.

Figure 6A is a schematic illustration of the 9-speed shift pattern for the transmission of Figure 6.

Figure 6B is a chart illustrating the engaged clutches for the various selectable ratios of the 9-speed version of the transmission of Figure 6.

Figure 6C is a schematic illustration of the 12-speed shift pattern for the transmission of Figure 6.

Figure 6D is a chart illustrating the engaged clutches for the various selectable ratios of the 12-speed version of the transmission of Figure 6.

Figures 7 and 8, respectively, are schematic illustrations of the splitter and subsplitter controls for the overdrive and direct 9-speed versions, respectively, of the transmission of Figure 6.

Figure 9 is a sectional view of the transmission of Figure 2.

### DESCRIPTION OF THE PREFERRED EMBODIMENT

Certain terminology will be used in the following description for convenience in reference only and is not limiting. The terms "upwardly," "downwardly," "rightwardly" and "leftwardly" designate directions in the drawings to which reference is made. The words "inwardly" and "outwardly" will refer, respectively, to directions toward and away from the geometric center of a device and designated parts thereof. The foregoing applies to the words specifically mentioned, derivatives thereof and words of similar import.

The term "compound transmission" is used to designate a change-speed or change-gear transmission having a main transmission section and one or more auxiliary transmission sections connected in series whereby the selected gear reduction in the main transmission section may be compounded by further selected gear reduction in the auxiliary transmission section(s).

"Synchronized clutch assembly" and words of similar import shall designate a clutch assembly utilized to non-rotatably couple a selected gear to a shaft by means of a positive clutch in which attempted engagement of such clutch is prevented or blocked until the members of the clutch are at substantial synchronous rotation and a relatively large capacity friction means is associated with the clutch members and are sufficient, upon initiation of a clutch engagement, to cause the clutch members and all members rotating therewith to rotate at a substantially synchronous speed.

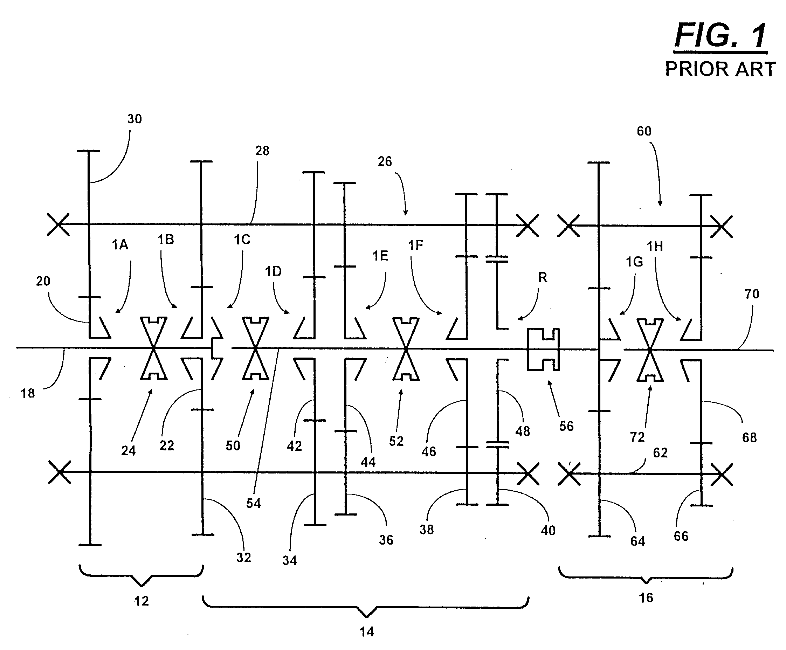

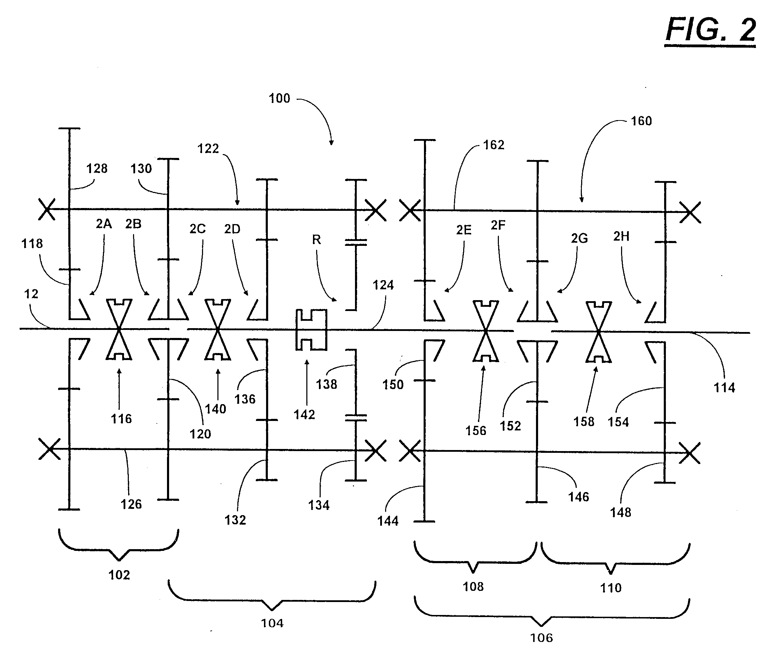

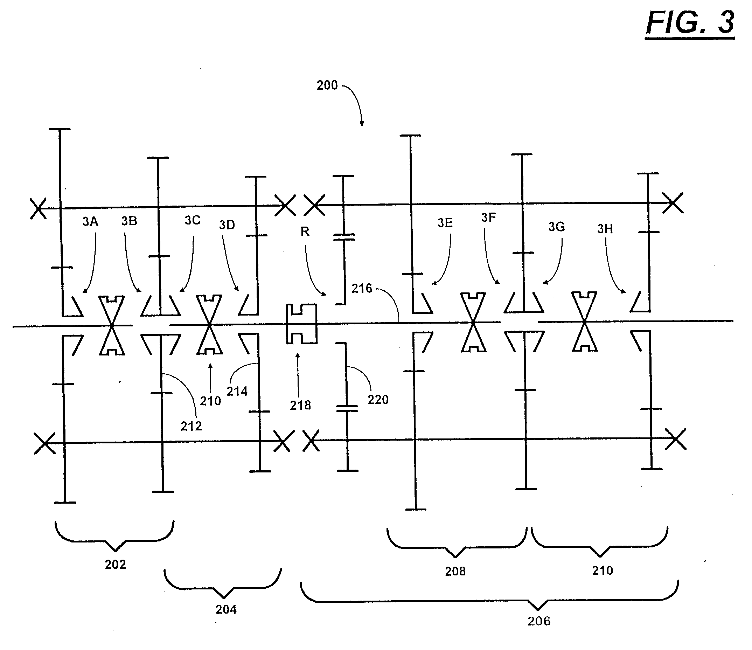

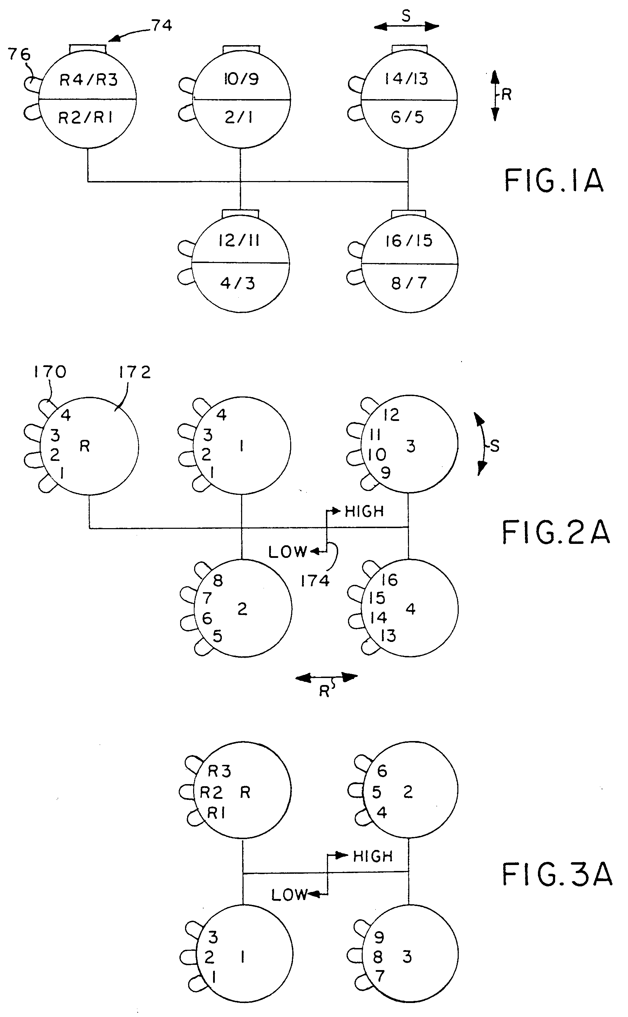

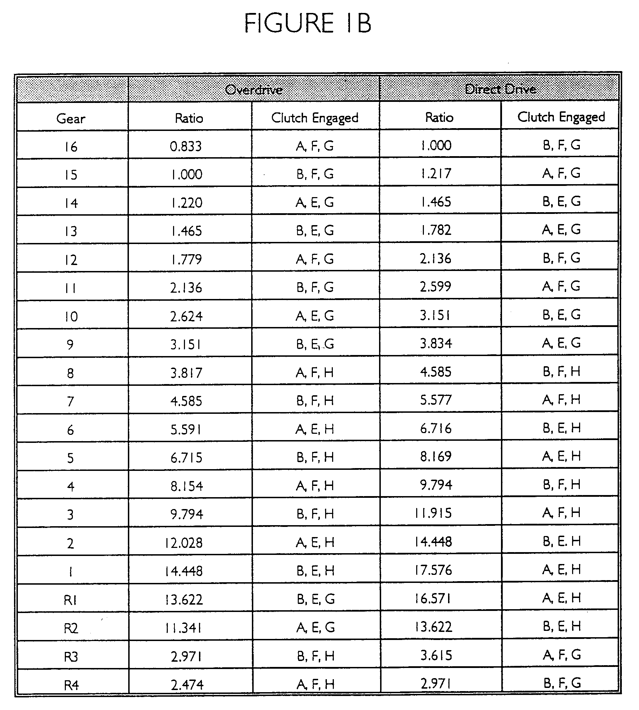

Fig. 1 schematically illustrates a prior art 16-forward-speed, 4-reverse-speed, synchronized transmission 10. Prior art transmission 10 is a "(2) × (4) × (2)" type 16-speed transmission having a two-speed input splitter section 12, a four-forward-speed main section 14, and a two-speed range section 16, all connected in series. As previously mentioned, transmissions of this general type are sold by the assignee's wholly owned subsidiaries in Europe under the "S Series" trademark and may be seen in further detail by reference to aforementioned U.S. Patent No. 5,390,561.

Briefly, input shaft 18 is supported in the transmission housing forward wall (not shown) and is surrounded by two input gears 20 and 22, a selected one of which is clutched to the input shaft by double-acting, synchronized clutch 24 to provide a two-speed splitter input section. Front counter shaft assemblies 26 each includes a counter shaft 28 carrying counter shaft gears 30, 32, 34, 36, 38 and 40. Gears 30 and 32 are constantly meshed with the input gears 20 and 22, respectively. In main section 14, gears 34, 36, 38 and 40 are constantly meshed with main shaft gears 42, 44, 46 and an idler (not shown) constantly meshed with reverse main shaft gear 48. Double-acting, synchronized clutch assemblies 50 and 52 are provided on the main shaft 54 to clutch the main shaft 54 to a selected one of the input shaft 18 or main shaft gears 42, 44 or 46. A non-synchronized clutch 56 is used to clutch the reverse main shaft gear 48 to the main shaft 54.

The rearward end of main shaft 54 extends into the two-speed range section 16 and carries gear 58 fixed for rotation therewith. A pair of auxiliary section counter shaft assemblies 60 each includes an auxiliary section counter shaft 62 carrying two auxiliary section counter shaft gears 64 and 66 fixed for rotation therewith. Gear 64 is constantly meshed with auxiliary input gear 58, while gear 66 is constantly meshed with an output gear 68, which surrounds the output shaft 70. A two-position, synchronized range clutch 72 is carried by the output shaft 70 and is utilized to clutch either output gear 68 or main shaft 54 to the output shaft 70.

Two-position, synchronized clutch 24 is movable leftward and rightward, respectively, to define selectively engageable clutches 1A and 1B. Two-position, synchronized clutch member 50 is movable leftward and rightward, respectively, to define selectively engageable clutches 1C and 1D, respectively. Two-position, synchronized clutch member 52 is movable leftward and rightward, respectively, to define selectively engageable clutches 1E and 1F, respectively. Non-synchronized jaw clutch 56 is movable leftward to define selectively engageable clutch R. Two-position, synchronized clutch member 72 is movable leftward and rightward, respectively, to define selectively engageable clutches 1G and 1H, respectively.

Fig. 1A illustrates a "repeat-H" type shift pattern for controlling the shifting of prior art transmission 1. Briefly, range clutch 72 is controlled by a range control button 74, while the splitter clutch 24 is controlled by the splitter switch 76. Main section clutches 50, 52 and 56 are controlled by a shift lever acting through a shift bar housing assembly of known type, examples of which may be seen by reference to aforementioned U.S. Patents No. 4,920,815 and 5,219,391. Typically, the shift bar housing assembly will have an interlock mechanism for preventing engagement of more than one of clutches 50, 52 and 56 at a time.

Fig. 1B is a chart illustrating the engaged clutches and overall transmission ratios associated with each of the selectable ratios for both the overdrive and direct drive versions of the prior art transmission 10 illustrated in Fig. 1. As is known, the overdrive transmission preferably will be provided with an "X-type" control of the type illustrated in U.S. Patent No. 5,363,715, the disclosure of which is incorporated by reference herein, which will allow both the overdrive and direct drive versions of transmission 10 to be shifted in a standard H-type pattern. Of course, transmission 10 could utilize a "double-H" type control, which would eliminate the necessity for the range control button 74.

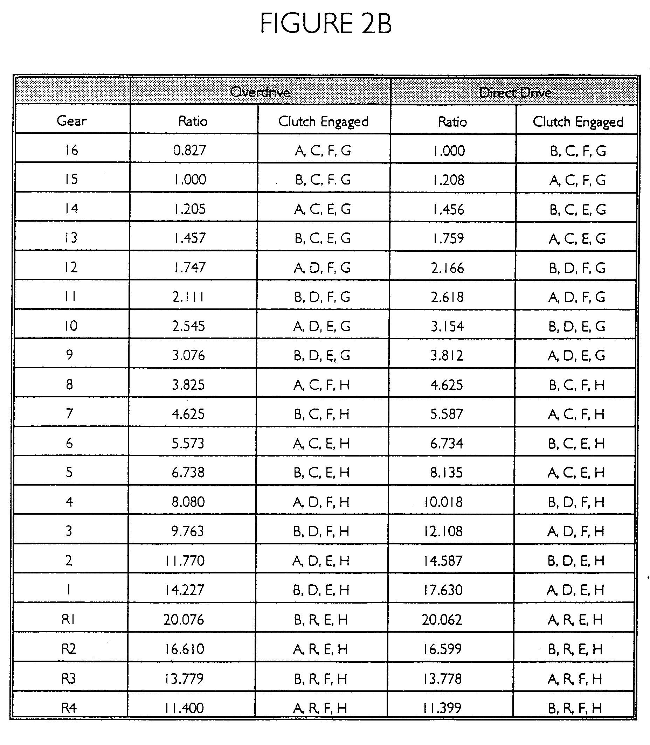

Referring now to Fig. 2, there is schematically illustrated a 16-forward-speed, 4-reverse-speed, compound manually operated transmission 100 according to the present invention. Compound transmission 100 includes a two-speed input subsplitter section 102, a main transmission section 104, and a three-gear-layer, four-speed combined splitter/range-type auxiliary section 106, which includes a splitter section 108 and a range section 110, all connected in series. Combined splitter/range auxiliary section 106 is of the type described in aforementioned U.S. Patent No. 4,754,665. Typically, transmission 100 is housed within a single housing (not shown) and includes an input shaft 112 driven by a prime mover (not shown), such as a well-known diesel engine or the like through a master friction clutch. The combined splitter/range auxiliary section supports an output shaft 114 for driving connection to the vehicular final drive mechanisms, such as a transfer case, drive axle assemblies or the like.

In the subsplitter input section 102, the input shaft 112 carries a double-acting, synchronized clutch member 116, which may be selectively positioned to engage one of the input gears 118 or 120 to the input shaft 112. Preferably, as will be discussed in greater detail below, clutch member 116 also may be positively positioned to an intermediate position wherein the input shaft 112 is disengaged from both of the input gears 118 and 120. Double-acting, synchronized clutch member 116 may be selectively moved leftward or rightward, respectively, to define selectively engageable clutches 2A and 2B, respectively.

The subsplitter/input gears 118 and 120 simultaneously drive a pair of substantially identical main section counter shaft assemblies 122 at substantially identical rotational speeds. In the transmission illustrated, two substantially identical main section counter shaft assemblies are provided on diametrically opposite sides of a main shaft 124, which main shaft is generally coaxially aligned with the input shaft 112 and the output shaft 114. Each of the main section counter shaft assemblies 122 comprises a main section counter shaft 126 supported by bearings and provided with an identical grouping of main section counter shaft gears 128, 130, 132 and 134, fixed for rotation therewith. Main section drive gears 136 and 138 surround the main shaft 124 and are selectively clutchable, one at a time, to the main shaft 124 for rotation therewith by double-acting friction clutch member 140 and sliding non-synchronized clutch member 142. Double-acting, synchronized clutch member 140 also may be utilized to clutch the input gear 120 directly to the input shaft 112 to provide a direct driving relationship therebetween. Of course, with clutch 2B engaged, input gear 120 will rotate with the input shaft 112.

Main section drive gear 136 is in continuous meshing engagement with and is floatingly supported by the associated main section counter shaft gears 132, and main section main shaft gear 138 is the reverse gear and is in continuous meshing engagement with counter shaft gear 134 by means of conventional idler gears (not shown), which mounting means and the special advantages resulting therefrom are explained in greater detail in U.S. Patents No. 3,105,395 and 3,335,616, the disclosures of which are incorporated by reference herein. Double-acting, synchronized friction clutch member 140 may be selectively moved leftward or rightward, respectively, to define selectively engageable clutches 2C or 2D, respectively. Sliding clutch collar 142 may be moved rightwardly to define selectively engageable reverse clutch R. Main section clutch members 140 and 142 are axially positioned by shift forks (not shown), which are controlled by shift bar or shift shaft assemblies, allowing one of the clutch members to be axially positioned from its neutral position at a time, as is well known in the prior art. It may be seen that in the manually controlled main section 104 of transmission 100, there are defined three clutches, 2C, 2D and R, which are mutually exclusively engageable to drivingly couple either input/subsplitter gear 120, main section drive gear 136 or main section reverse gear 138, respectively, to the main shaft 124.

The combined splitter/range auxiliary section 106 is of the type described in greater detail in aforementioned U.S. Patent No. 4,754,665. The combined splitter/range auxiliary section 106 includes two substantially identical counter shaft assemblies 160, each comprising an auxiliary counter shaft 162 supported by bearings in a housing and carrying three auxiliary section counter shaft gears 144, 146 and 148 fixed for rotation therewith. Auxiliary section counter shaft gears 144 are constantly meshed with and support auxiliary section splitter gear 150, which surrounds the main shaft 124. Auxiliary section counter shaft gears 146 are constantly meshed with and support auxiliary section splitter/range gear 152, which surrounds the main shaft 124 at the rear end thereof adjacent the coaxial front end of output shaft 114. Auxiliary section counter shaft gears 148 are constantly meshed with and support auxiliary section range gear 154, which surrounds the output shaft 114.

A double-acting, synchronized clutch member 156 is utilized to selectively couple either the splitter gear 150 or the splitter/range gear 152 to the main shaft 124, while a two-position synchronized clutch member 158 is utilized to selectively couple the splitter/range gear 152 or the range gear 154 to the output shaft 114. The structure and function of the double-acting, synchronized jaw clutch members 116, 140, 156 and 158 may be of the well-known type of synchronized jaw clutch seen by reference to U.S. Patents No. 4,462,489; 4,125,179 and 2,667,995, the disclosures of which are incorporated by reference herein, or may be of the boosted synchronizer type illustrated in aforementioned U.S. Patents No. 5,065,855; 5,078,244; 5,078,245; 5,086,897 or 5,111,922.

In the splitter section 108, the double-acting synchronized jaw clutch member 156 may be moved leftward or rightward, respectively, to define selectively engageable clutches 2E and 2F, respectively. In the range section 110 of the combined auxiliary section 106, double-acting synchronized clutch member 158 may be moved leftward or rightward, respectively, to define selectively engageable clutches 2G or 2H, respectively.

In accordance with established gear ratio selection principles, the splitter step should be generally equal to the square root of the main section ratio step or steps, the range section step should equal about the main section ratio step raised to the nth power where N equals the number of main section ratio steps occurring in all the ranges (*i.e*., N = 2 in transmission 100). The subsplitter ratio step should be generally equal to the square root of the splitter ratio step. Given the desired ideal ratios, gearing to approximate these ratios is selected. Fig. 2B is a chart illustrating the engaged clutches and overall transmission ratios associated with the various selectable drive ratios for overdrive and direct drive versions of the compound transmission of Fig. 2.

Fig. 2A illustrates an "H-type" shift pattern for controlling the shifting of the transmission 100 of the present invention. Briefly, a four-position selector switch 170, preferably mounted at the shift lever/shift knob 172 is utilized to control the operation of the subsplitter clutch 116 and the splitter clutch 156, while an automatic range switch 174 is utilized to control the shifting of range clutch 158. Main section clutches 140 and 142 are controlled by a shift lever acting through a shift bar housing or shift shaft assembly of known type, examples of which may be seen by reference to aforementioned U.S. Patents No. 4,920,815 and 5,219,391. Typically, an interlock mechanism will be provided to prevent engagement of clutches 140 and 142 at the same time.

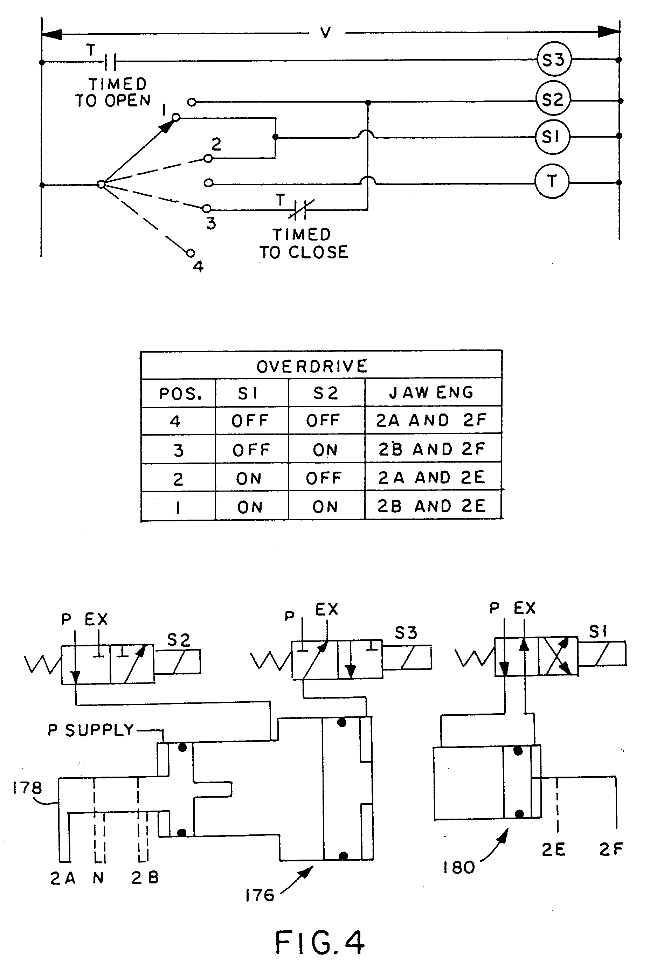

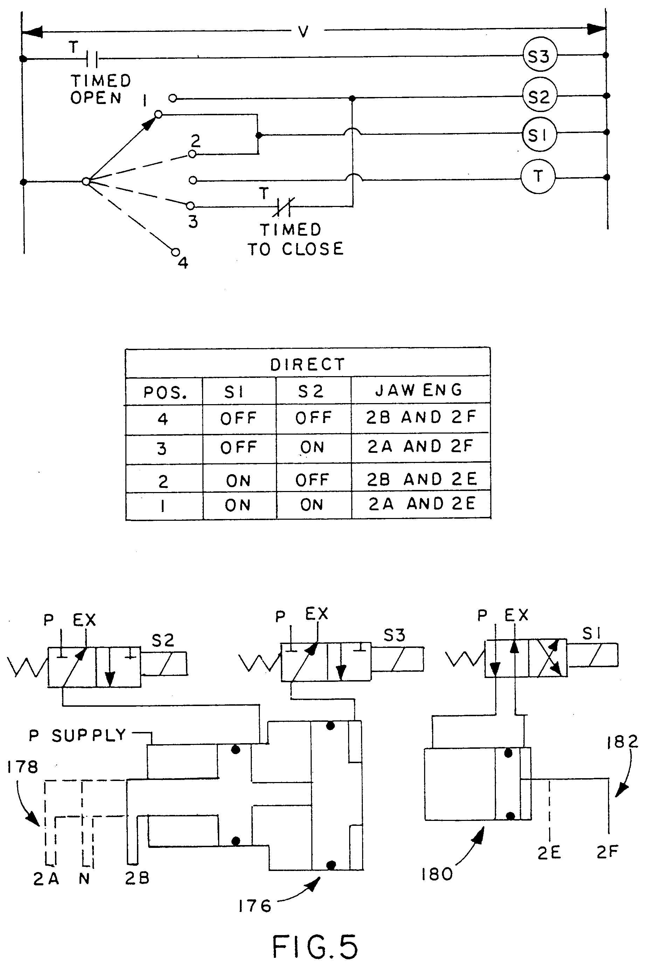

Figs. 4 and 5 are schematic representations of the control and actuator mechanism operated by the selector switch 170 for the overdrive and direct drive versions, respectively, of transmission 100. Briefly, a three-position, pressurized fluid actuator piston assembly 176 operates a shift fork member 178 for positioning the subsplitter double-acting, synchronized clutch member 116, while a two-position, fluid-actuated piston actuator 180 operates a shift fork 182 for axially positioning the splitter double-acting, synchronized clutch member 156. Controls of this general type are known in the prior art, as may be seen by reference to aforementioned U.S. Patent No. 5,054,591.

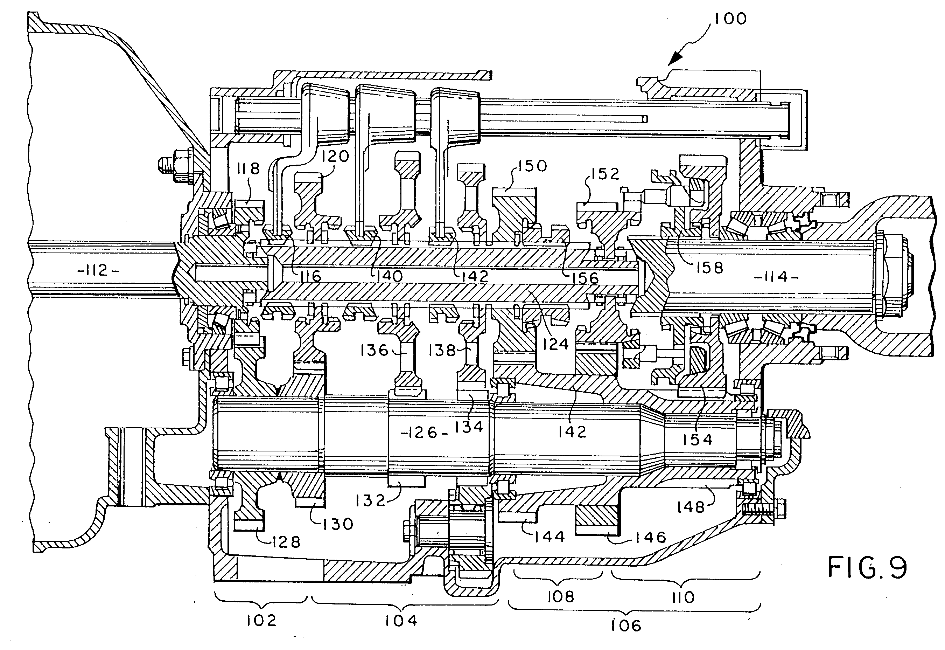

Figure 9 is a sectional view of transmission 100.

Comparing the 16-speed transmission 100 of the present invention with the prior art transmission 10, it may be seen that shifting from first speed to sixteenth speed in the transmission 100 requires only three shift lever movements (1-2-3-4) to (5-6-7-8) to (9-10-11-12) to (13-14-15-16), while in the prior art transmission 10, seven shift lever movements are required (1-2) to (3-4) to (5-6) to (7-8) to (9-10) to (11-12) to (13-14) to (15-16). Also, transmission 100 of the present invention utilizes an autoshift feature for shifting the range clutch 158, thereby eliminating the necessity of the operator's manually controlling a range selector switch 74 and the possibility of accidental overloading of the synchronzers if the range is not shifting before the 8/9 upshift or the 9/8 downshift. The simple shift pattern with four thumb-operated splitter shift positions and automatic range shift is more convenient for the driver and provides easy skip shifting with the four positions. As may be seen by reference to Figs. 4 and 5, in the preferred embodiment of transmission 100, the actuator 166 is a three-position actuator allowing the subsplitter input section clutch 116 to be, at least momentarily, positively positioned in a neutral position and, thus, during compound splitter shifting, the main shaft speed may be quickly brought to synchronous, while the front input splitter is in neutral.

Further comparing the 16-forward-speed, 4-reverse-speed transmission 100 of the present invention with the transmission 10 of the prior art, it may be seen that the transmission 100 utilizes 23 gears (including two unshown reverse idler gears), while the prior art transmission 10 requires 26 gears (including two unseen reverse idler gears). Further, the gearing arrangement of transmission 100 of the present invention allows the ratio across the low-speed main section synchronizer (and, thus, the torque across this synchronizer clutch) to be reduced, as compared to the prior art transmission 10. By way of example, the ratio across clutch 2D (*i.e*., the speed of the input shaft 112, as compared to the speed of main shaft 124) may be about 2.11:1 for overdrive and 2.62:1 for direct drive versions, as compared to 3.15:1 for overdrive and 3.83:1 for direct drive in the transmission 10 of the prior art. This results in more effective boosting or self-energizing of boosted or self-energized synchronizers when utilized in the low-speed main section clutch, as is the case in the preferred embodiment of transmission 100.

Referring to Figs. 1A and 2A, it may be seen that transmission 100 provides four selectable reverse ratios, all having a relatively high reduction, while the four reverse ratios provided by the prior art transmission 10 include two reverse ratios, R3 and R4, which are of a relatively impractical ratio step.

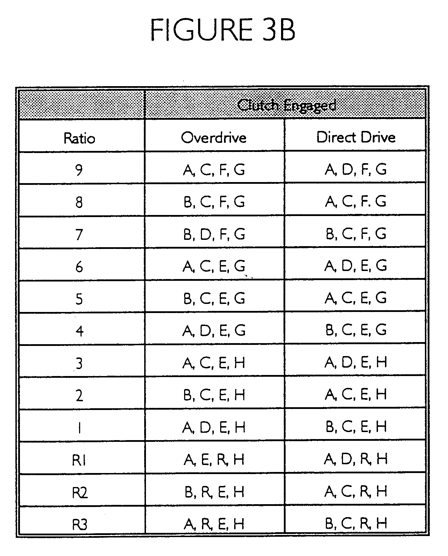

Fig. 3 schematically illustrates a 9-forward-speed, 3-reverse speed alternate embodiment of the present invention. Compound transmission 200 includes a two-speed input subsplitter section 202 substantially, structurally and functionally identical to the input subsplitter section 102 described above, a main transmission section 204 and a four-speed combined splitter/range-type and reverse-speed auxiliary section 206, all connected in series. Auxiliary section 206 includes a splitter section 208 and a range section 210, which are substantially, structurally and functionally identical to splitter and range sections 108 and 110, respectively, described above in connection with transmission 100.

The main section 204 includes a double-acting, synchronized clutch member 210 for selectively clutching either input subsplitter gear 212 or main section drive gear 214 to the main shaft 216. It is noted, however, that the main section 204 does not include the reverse ratio gearing. The auxiliary section 206, in addition to including the splitter auxiliary section 208 and the range auxiliary section 210 connected in series, also includes a range clutch 218 by which the range gear 220 may be selectively clutched to the main shaft 216. The shift pattern for manually controlling shifting of transmission 200 may be seen by reference to Fig. 3A, while Fig. 3B illustrates the clutches engaged for the various selectable ratios of transmission 200.

Accordingly, it may be seen that a new and improved compound transmission and transmission control therefor have been provided, which minimize the amount of lever shifting required and/or the number of gears required for a particular transmission, improve the effectiveness of boosted or self-energizing synchronizers used at the main section lowest gear ratio, provide more usable reverse ratios (as compared to comparable transmissions of the prior art).

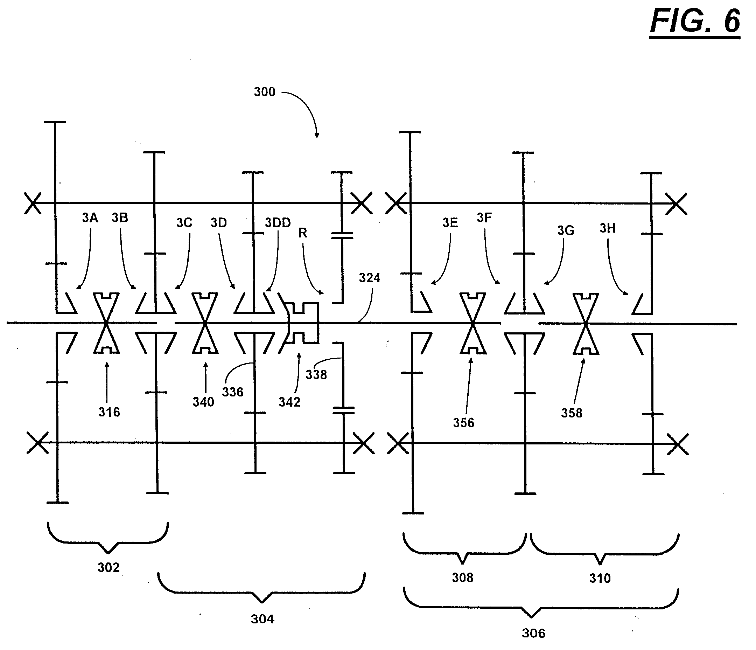

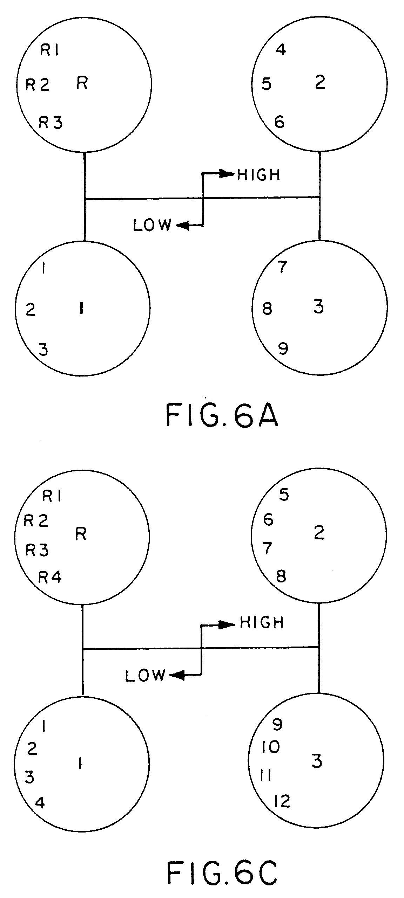

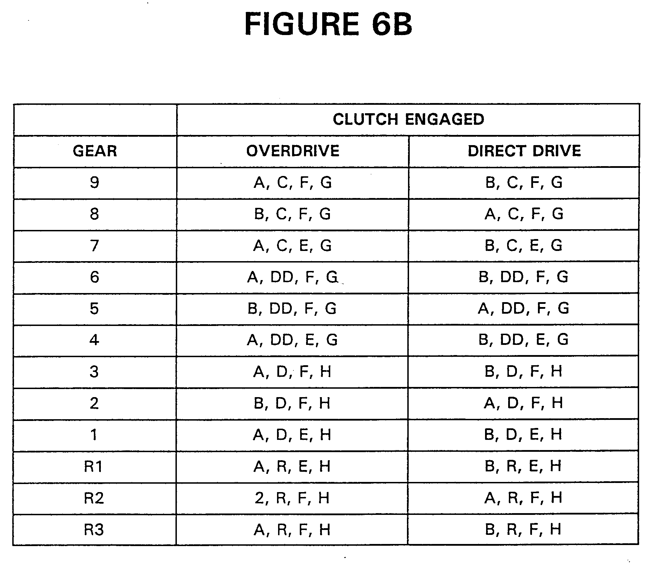

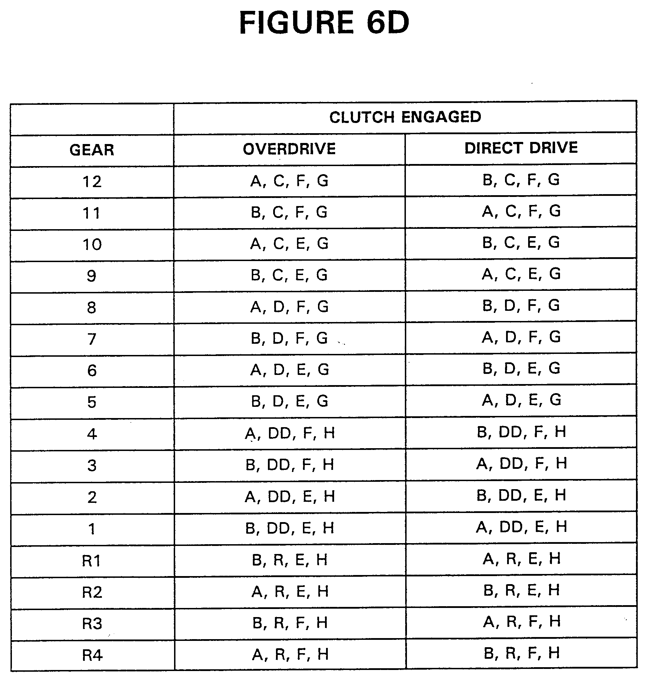

A further alternate structure for the transmission of the present invention is illustrated in Fig. 6. Briefly, except for clutch 342 and the ratios of gears, transmission 300 is structurally identical to the transmission 100 illustrated in Fig. 2.

As with transmission 100, transmission 300 includes a two-speed input subsplitter 302, a multi-speed main section 304, and a three-layer combined splitter and range-type auxiliary section 306 comprising a splitter section 308 and a range section 310. Subsplitter input section 302 includes a double-acting clutch 316, splitter section 308 includes a double-acting clutch 356, and range section 310 includes a double-acting clutch 358. Clutches 316, 356 and 358 are substantially structurally and functionally identical to clutches 116, 156 and 158, respectively, described above.

Main section 304 includes a double-acting clutch 340, which is substantially identical to clutch 140 described above. Clutch 342 differs from clutch 142, described above, as it may be utilized to clutch gear 336, as well as reverse gear 338, to the main shaft 324. Accordingly, clutch 3D (defined by clutch member 340) or clutch 3DD (defined by clutch member 342) may be used to clutch the low gear 336 to the main shaft 324. This allows an "H-type" shifting pattern to be maintained, as may be seen by reference to Figs. 6A and 6C.

Figs. 6A and 6C, respectively, illustrate the shift patterns, and Figs. 6B and 6D, respectively, illustrate the clutch engagement charts for the 9-speed and 12-speed versions, respectively, of the transmission 300. The transmissions of Figs. 3 and 6 also could be provided in 16-speed versions.

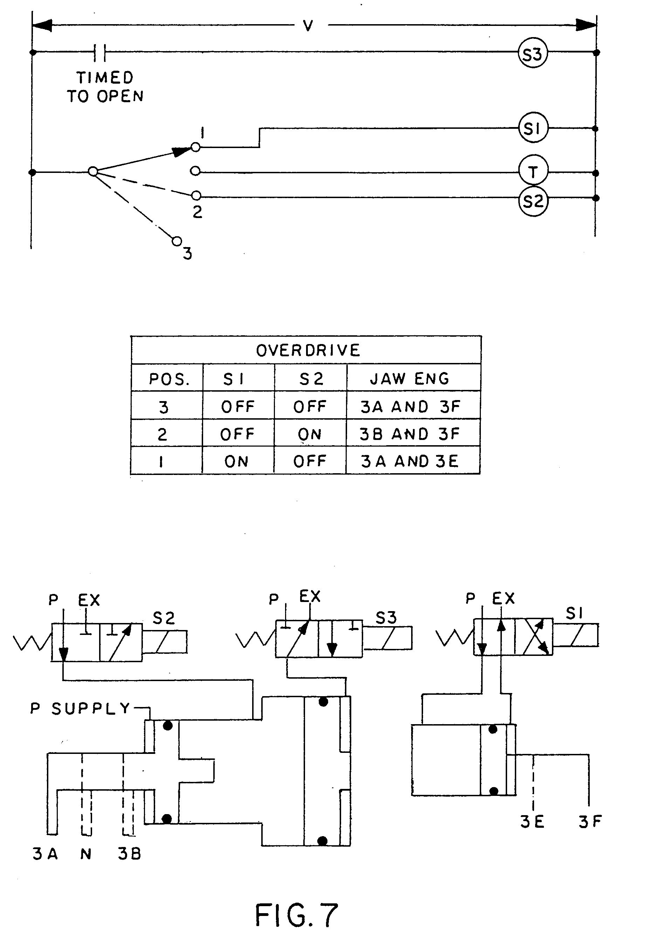

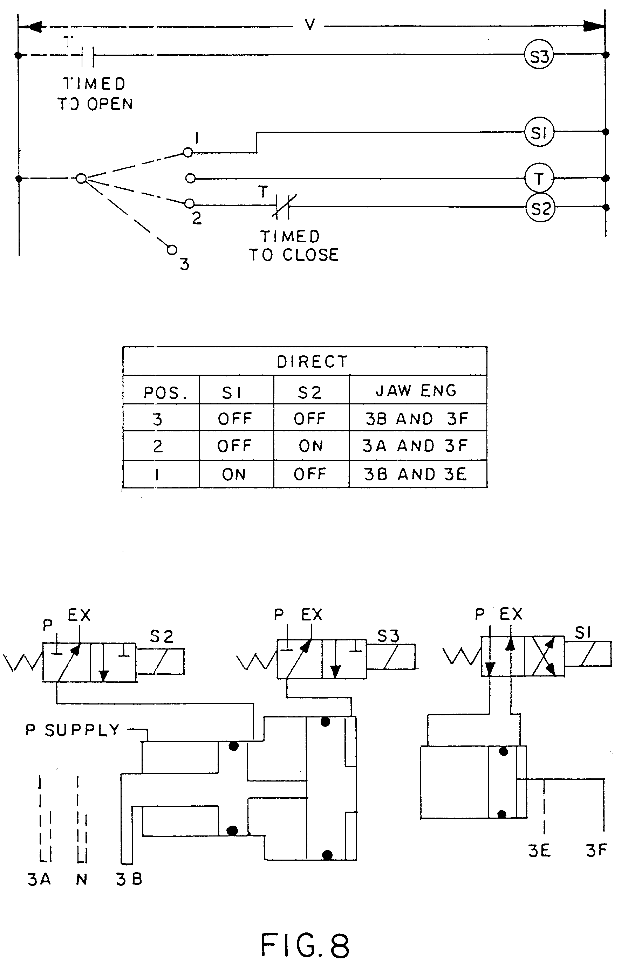

Figs. 7 and 8, similar to Figs. 4 and 5, are schematic representations of the control and actuator mechanisms for the overdrive and direct drive versions of transmission 300.

Although the present invention has been described with a certain degree of particularity, it is understood that various modifications are possible without departing from the spirit and the scope of the invention as hereinafter claimed.

## Claims

1. A manually shifted compound transmission comprising a two-speed input subsplitter section connected in series with a mulitple-speed main transmission section connected in series with a two-speed splitter section connected in series with a two-speed range section, said subsplitter section including a subsplitter clutch for engaging a selected one of said subsplitter ratios, said splitter section comprising a splitter clutch for engaging a selected one of said splitter ratios, said range section comprising a range clutch for selectively engaging one of said range section ratios, said main section comprising a main section clutch for selectively engaging a main section ratio, a two-position subsplitter actuator for operating said subsplitter clutch, a two-position splitter actuator for operating said splitter clutch, and a two-position range operator for operating said range clutch;
a manually operated four-position switch for operating said subsplitter actuators, each of said four switch positions corresponding to a unique combination of subsplitter and splitter actuators.

2. The transmission of claim 1 wherein said main section clutch is controlled by a manually operated shift lever.

3. The transmission of claim 2 wherein said transmission includes a range switch responsive to movements of said shift lever to automatically control said range actuator.

4. The transmission of claim 2 wherein said shift lever includes a shift knob and said four-position switch is located at said shift knob.

5. The transmission of claim 3 wherein said shift lever includes a shift knob and said four-position switch is located at said shift knob.

6. The transmission of claim 1 wherein said main section clutch is a synchronized clutch.

7. The transmission of claim 6 wherein said main section clutch is a self-energized, synchronized clutch.

8. The transmission of claim 1 wherein said subsplitter actuator is a three-position actuator having a first position for engagement of one of said subsplitter ratios, a second position for engagement of the other of said subsplitter ratios, and a third position for disengagement of both of said subsplitter ratios.

9. The transmission of claim 3 wherein said subsplitter actuator is a three-position actuator having a first position for engagement of one of said subsplitter ratios, a second position for engagement of the other of said subsplitter ratios, and a third position for disengagement of both of said subsplitter ratios.

10. The transmission of claim 1 wherein said splitter and range sections are defined by a combined, three-layer, four-speed combined splitter and range output section.

11. The transmission of claim 1 including a control responsive to the manually selected position of said four-position switch for controlling said subsplitter and splitter actuators, said control effective to cause said subsplitter actuator to assume said third position thereof for a period of time when causing a change in position in said splitter actuator.

12. The transmission of claim 2 wherein said main transmission section (304) includes one ratio gear (336) selectively engageable by two independently movable clutch members (340, 342).

13. The transmission of claim 12 wherein one of said independently movable clutch members (342) is the clutch member also utilized to engage a reverse ratio gear (338).

14. A manually shifted compound transmission comprising a two-speed input subsplitter section connected in series with a mulitple-speed main transmission section connected in series with a two-speed splitter section connected in series with a two-speed range section, said subsplitter section including a subsplitter clutch for engaging a selected one of said subsplitter ratios, said splitter section comprising a splitter clutch for engaging a selected one of said splitter ratios, said range section comprising a range clutch for selectively engaging one of said range section ratios, said main section comprising a main section clutch for selectively engaging a main section ratio, a two-position subsplitter actuator for operating said subsplitter clutch, a two-position splitter actuator for operating said splitter clutch, and a two-position range operator for operating said range clutch;
a manually operated multiple-position switch for operating said splitter and subsplitter actuators, each of said switch positions corresponding to a unique combination of subsplitter and splitter actuators.

15. The transmission of claim 14 wherein said main section clutch is controlled by a manually operated shift lever.

16. The transmission of claim 15 wherein said transmission includes a range switch responsive to movements of said shift lever to automatically control said range actuator.

17. The transmission of claim 15 wherein said shift lever includes a shift knob, and a four-position switch is located at said shift knob.

18. The transmission of claim 16 wherein said shift lever includes a shift knob, and a four-position switch is located at said shift knob.

19. The transmission of claim 16 wherein said main section clutch is a synchronized clutch.

20. The transmission of claim 14 wherein said main section clutch is a self-energized, synchronized clutch.

21. The transmission of claim 15 wherein said main transmission section (304) includes one ratio gear (336) selectively engageable by two independently movable clutch members (340, 342).

22. The transmission of claim 21 wherein one of said independently movable clutch members (342) is the clutch member also utilized to engage a reverse ratio gear (338).

23. The transmission of claim 15 wherein said shift lever includes a shift knob, and a three-position switch is located at said shift knob.

24. The transmission of claim 16 wherein said shift lever includes a shift knob, and a three-position switch is located at said shift knob.
